# EUROPÄISCHE PATENTSCHRIFT

(11) **EP 1 501 710 B1**
(45) Veröffentlichungstag und Bekanntmachung des Hinweises auf die Patenterteilung: **14.09.2005**
(21) Anmeldenummer: 03747077.0
(22) Anmeldetag: 11.04.2003
(51) Int. Cl.: B60S 1/38

(54) **WISCHBLATT**
WIPER BLADE
BALAI D'ESSUIE-GLACE

(30) Priorität: 23.04.2002 DE 10218033
(43) Veröffentlichungstag der Anmeldung: 02.02.2005
(73) Patentinhaber: ROBERT BOSCH GMBH, 70442 Stuttgart (DE)
(72) Erfinder: BAUER, Peter-Josef, B-3300 Tienen (BE); WILMS, Christian, B-3582 Koersel-Beringen (BE); VERELST, Hubert, B-3300 Tienen (BE); GRAMMENS, Joris, B-3350 Linter (BE); VANGEEL, Tom, B-3540 Herk-de-Stad (BE)
(86) Internationale Anmeldenummer: PCT/DE2003/001232
(87) Internationale Veröffentlichungsnummer: WO 2003/091078

(56) Entgegenhaltungen:
- WO-A-00/34090
- DE-A- 3 829 343
- DE-A- 19 647 347
- DE-A- 19 731 683
- GB-A- 2 036 547
- US-A- 4 442 566

## Beschreibung

### Stand der Technik

Die Erfindung geht von einem Wischblatt nach dem Oberbegriff des Anspruchs 1 aus.

Bekannte Scheibenwischer besitzen einen Wischarm, der aus einem Befestigungsteil und einem damit gelenkig verbundenen Gelenkteil mit einer Wischstange aufgebaut ist. Mit dem freien Ende der Wischstange ist ein Wischblatt gelenkig verbunden, das aus einer Wischleiste und einem Wischleistenträger aufgebaut ist, in der Regel einem Tragbügelsystem mit einem Mittelbügel und gegebenenfalls mit untergeordneten Bügeln, z.B. einem Zwischenbügel und/oder Krallenbügeln, die die Wischleiste halten. Die Bügel sind mit den untergeordneten Bügeln ebenfalls gelenkig verbunden, so dass sich die Wischleiste während der Schwenkbewegung einer Wölbung der Fahrzeugscheibe anpassen kann. Solche Scheibenwischer sind z.B. aus der DE 37 44 237 A1 bekannt. Die Gelenke zwischen den Bügeln werden in der Regel durch Kunststoffteile gebildet, die gleichzeitig die Stirnseite des Profils des übergeordneten Bügels abdekken.

Aus der DE 197 38 232 A1 ist ferner ein Wischleistenträger in Form eines Tragelements aus einem elastischen, hochfesten Kunststoff für eine Wischleiste bekannt, das im unbelasteten Zustand eine Krümmung aufweist, die so ausgelegt ist, dass sich ein gleichmäßiger Anpressdruck ergibt, wenn sich im Betrieb des Wischblatts die Wischleiste vollständig an die Fahrzeugscheibe anlegt. Es sind ferner ähnliche Wischblätter mit einem Tragelement bekannt, bei denen in ein Kunststoffprofil vorgebogene Federschienen seitlich eingelegt sind. An den Stirnseiten werden als Abschluss des Profils Kappen aus Kunststoff montiert (siehe z.B. Dokument WO 0 034 090). Im Folgenden wird unter Wischleistenträger sowohl ein Tragbügelsystem als auch ein Tragelement im oben beschriebenen Sinn verstanden.

Wischblätter neigen während des Wischvorgangs häufig zum Schwingen. Bei der Schwenkbewegung nimmt die Geschwindigkeit, mit welcher das Wischblatt über die Windschutzscheibe gleitet, vom inneren Radius zum äußeren Radius hin stetig zu. Die quer zur Längsrichtung des Wischblatts wirkenden Reibkräfte, die von der Gleitgeschwindigkeit abhängen, nehmen mit zunehmender Gleitgeschwindigkeit ab, so dass sich um eine Hochachse des Wischblatts ein Drehmoment ergibt, das in den Umkehrlagen seine Richtung wechselt. Dieses Wechselmoment belastet die Lagerstelle zwischen dem Wischarm und dem Wischblatt. Vor allem bei relativ langen Wischblättern ist die Führung am Gelenk zwischen dem Wischblatt und dem Wischarm nicht ausreichend stabil, um Schwingungen zu unterbinden. Da ein Wischblatt ein schlankes, elastisches Bauteil ist, und da große Unterschiede der Reibverhältnisse zwischen dem antriebsseitigen, inneren Bereich und dem äußeren Bereich des Wischblatts vorliegen, sowie wegen der Stick-Slipeffekte, wird das Wischblatt zum Schwingen angeregt. Dies führt insbesondere am Innenkreis des Wischblatts, wo besonders kleine Reibgeschwindigkeiten vorherrschen, zu unerwünschten seitlichen Bewegungen, die ab einer bestimmten Größe dazu führen können, dass das Wischblatt am Wischarm anschlägt und Klappergeräusche verursacht. Dies ist besonders kritisch, wenn die Fahrzeugscheiben trocken, verschmutzt, vereist oder nicht ausreichend feucht sind oder Schnee auf der Fahrzeugscheibe liegt. Da das Wischblatt dabei den Kontakt zur Fahrzeugscheibe kurzfristig verlieren kann, ist außerdem das Wischbild unbefriedigend. Das Wischblatt neigt umso eher zum Rattern, je mehr Bügelteile es aufweist. Ferner verhalten sich leichte Wischblätter mit einer geringen Federsteifigkeit ungünstiger als andere.

Aus der DE 197 31 683 A1 ist ferner eine Einrichtung zum Führen des Wischblatts bekannt, die ein erstes und ein zweites Teil aufweist. Sie ist im Bereich der Anlenkstelle des Krallenbügels angeordnet und mit dem Gelenkteil des Wischarms fest verbunden, z.B. durch Kleben, Schweißen, Löten, Klippsen, Klemmen usw. Das erste Teil der Einrichtung besitzt Führungswangen, welche die Gelenkstelle des Krallenbügels umgreifen und in Bezug auf den Wischarm seitlich führen. Auch das zweite Teil weist Führungswangen auf, zwischen denen das erste Teil teleskopartig geführt ist, so dass dessen Führungswangen kurz gehalten werden können und eine Kollision mit der Fahrzeugscheibe auch bei starken Wölbungen der Fahrzeugscheibe nicht zu befürchten ist. Das erste Teil ist zweckmäßigerweise verliersicher mit der Einrichtung verbunden, z.B. durch ein nachgiebiges Element.

Die Einrichtung kann aus einzelnen Blechteilen hergestellt und zusammengesetzt sein, bevorzugt ist sie jedoch ein Kunststoffspritzteil aus einem geeigneten Kunststoff. In jedem Fall werden aber zum Führen des Wischblatts zusätzliche Bauteile benötigt, wodurch ein erhöhter Fertigungs- und Montageaufwand und zusätzliche Materialkosten entstehen. Zwischen den Führungsflächen der Einrichtung werden in der Regel Luftspalte vorgesehen, um zu verhindern, dass das Gelenk zwischen Wischblatt und Wischarm durch toleranzbehaftete Wischarmgeometrien, z.B. Kröpfungen der Wischstange, nicht klemmt. Auch hierbei können Klappergeräusche entstehen, weil das seitliche Schwingen zwar stark vermindert, aber nicht vollständig vermieden wird.

### Vorteile der Erfindung

Nach der Erfindung ist an mindestens einer der Endkappen eine quer zur Längsrichtung des Wischblatts verlaufende Führungsrippe mit einer Führungsfläche seitlich angeformt. Da die Führungsrippe, die ein Teil einer Einrichtung zum Führen des Wischblatts darstellt, mit der Endkappe ein Bauteil bildet, ist zum Führen des Wischblatts kein zusätzliches Bauteil erforderlich. Dadurch werden vorteilhafterweise der Herstellungsaufwand und der Montageaufwand reduziert. Die Endkappe kann mit der Führungsrippe unmittelbar oder unter Zwischenschalten eines Führungsbügels im Profil des Wischarms geführt werden, in den das zum Scheibenwischerantrieb weisende Ende des Wischblatts eintaucht. Grundsätzlich ist es nur erforderlich, dass eine der beiden Endkappen des Wischblatts eine Führungsrippe aufweist. Um jedoch Montagefehler zu vermeiden, ist es zweckmäßig, auf beide Enden eine gleiche Endkappe mit einer Führungsrippe zu stecken.

Der Führungsbügel ist vorzugsweise ein Kunststoffteil und wird in das Gelenkteil eingesetzt, beispielsweise geklippst. Somit ist er ebenfalls einfach und mit geringem Aufwand zu montieren. Außerdem kann er die Gleiteigenschaften zwischen der Endkappe und dem Wischarm verbessern und ein günstigeres Führungsprofil ermöglichen als das Innenprofil des Wischarms. Ein weiterer Vorteil der Wischblattführung besteht darin, dass sie zu einem großen Teil vom Wischarm verdeckt wird, keinen zusätzlichen Einbauraum beansprucht und zudem noch eine kompakte Gestaltung des Scheibenwischers im Wischarm- und Wischblattbereich ermöglicht. Ein kompakter Scheibenwischer verursacht weniger Windgeräusche und besitzt ein besseres Design.

Der Führungsbügel weist ein den Innenabmessungen des Gelenkteils angepasstes äußeres Profil auf. Er stützt sich an der Innenkontur des Gelenkteils ab. Um die Führungsflächen zu verlängern, kann ein Teil des Führungsbügels über eine Seitenwand herausragen, die im Bereich der eintauchenden Endkappe als Anlagefläche für die Führungsfläche der Führungsrippe dient. Durch den eingesetzten Führungsbügel wird das Gelenkteil nur in einem für die Wischblattführung notwendigen Bereich verlängert und bleibt im Übrigen unverändert. Analog dem Führungsbügel passt auch die Form der Führungsrippe zum Profil des Gelenkteils. Weist das Gelenkteil beispielsweise ein u-förmiges Querschnittprofil auf, kann die zugeordnete Endkappe beidseitig angeformte Führungsrippen besitzen, deren Führungsflächen etwa rechtwinklig zur Grundfläche der Endkappe verlaufen und an den Seitenwänden des U-Profils mit einem geringen Spiel geführt werden. Durch die zweiseitige Anlage kann das Wischblatt in beiden Wischrichtungen geführt werden.

In einer Ausführung der Erfindung weist die Endkappe eine einseitig angeformte Führungsrippe mit einem Neigungswinkel zur Grundfläche der Endkappe auf, der geringfügig kleiner 90° ist. Diese Endkappe ist einem Wischarm mit einem dachförmigen Querschnittprofil zuzuordnen, wobei die Führungsrippe an einer Seitenwand geführt wird, deren Neigung zur Form der Führungsrippe passt. Taucht die Endkappe in den Wischarm ein, legt sich die Führungsrippe an die Seitenwand des Wischarms oder des Führungsbügels an, wobei das Wischblatt quer zu seiner Längsrichtung leicht vorgespannt wird. Durch Vorspannung besteht vorteilhafterweise in jedem Fall Kontakt zwischen der Führungsrippe und dem Führungsbügel, da Fertigungstoleranzen und Verschleiß der Einzelbauteile ausgeglichen werden. Ferner verliert die Endkappe durch die Vorspannung den Kontakt zum Wischarm auch dann nicht, wenn die Führungsrippe bei einer Wischbewegung in Wischrichtung vor dem Wischblatt liegt. Allerdings wird die Führungsrippe zweckmäßigerweise so angeordnet, dass sie in der Wischrichtung, die die größten Antriebskräfte erfordert, in Wischrichtung hinter dem Wischblatt liegt.

Das Wischblatt wird am kritischen Innenkreis des Wischfelds geführt, so dass Schwingungen vermieden werden und das Profil des Gelenkteils des Wischarms als Anlagefläche genutzt werden kann. Ferner wird das Gelenk zwischen dem Wischarm und dem Wischblatt entlastet, da durch die seitliche Führung am Innenkreis das Drehmoment um die Hochachse des Wischblatts auf einer breiten Basis abgestützt wird.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Seitenansicht eines Wischarms mit einem gelenkig verbunden Wischblatt,
- Fig. 2: einen Schnitt entsprechend der Linie II-II in Fig. 1,
- Fig. 3: eine Variante zu Fig. 2
- Fig. 4: eine perspektivische Teilansicht von Fig. 3 in einer geänderten relativen Lage zwischen einem Gelenkteil und einem Wischblatt,
- Fig. 5: eine vergrößerte perspektivische Darstellung einer Endkappe nach Fig. 4 und
- Fig. 6: eine weitere Variante nach Fig. 2.

### Beschreibung der Ausführungsbeispiele

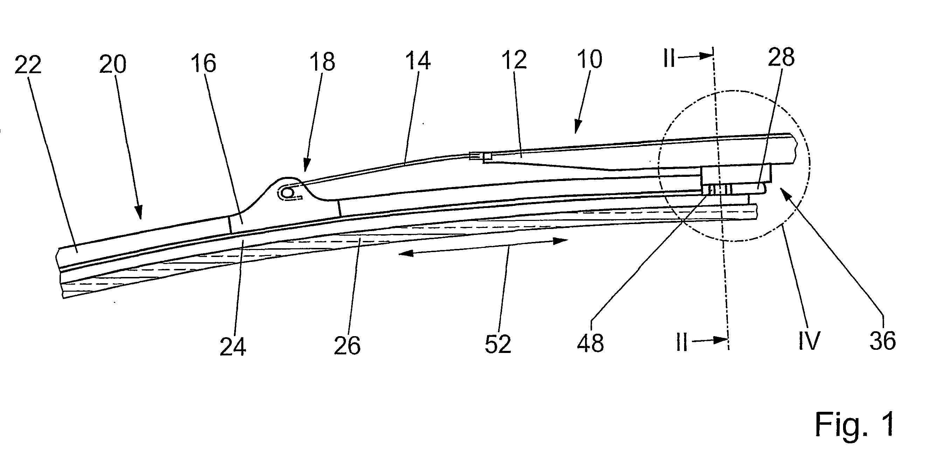

Ein Wischarm 10 ist aus einem Gelenkteil 12 und einer Wischstange 14 aufgebaut, mit der ein Wischblatt 20 über ein Gelenk 18 und ein Verbindungsstück 16 verbunden ist (Fig. 1). Das Wischblatt 20 besitzt einen elastischen, gelenkfreien Wischleistenträger 22, der als Spoiler ausgebildet ist und eine Wischleiste 24 trägt. Das Gelenk 18 zwischen der Wischstange 14 und dem Wischblatt 20 und die Elastizität des Wischleistenträgers 22 ermöglichen es, dass sich die Wischleiste 24 während der Wischbewegung der Wölbung einer Windschutzscheibe 26 anpassen kann. Dabei bewegt sich das Wischblatt 20 in einer Ebene senkrecht zur Windschutzscheibe 26 relativ zum Wischarm 10, wobei die relative Hubbewegung am Ende des Wischblatts 20 besonders groß ist.

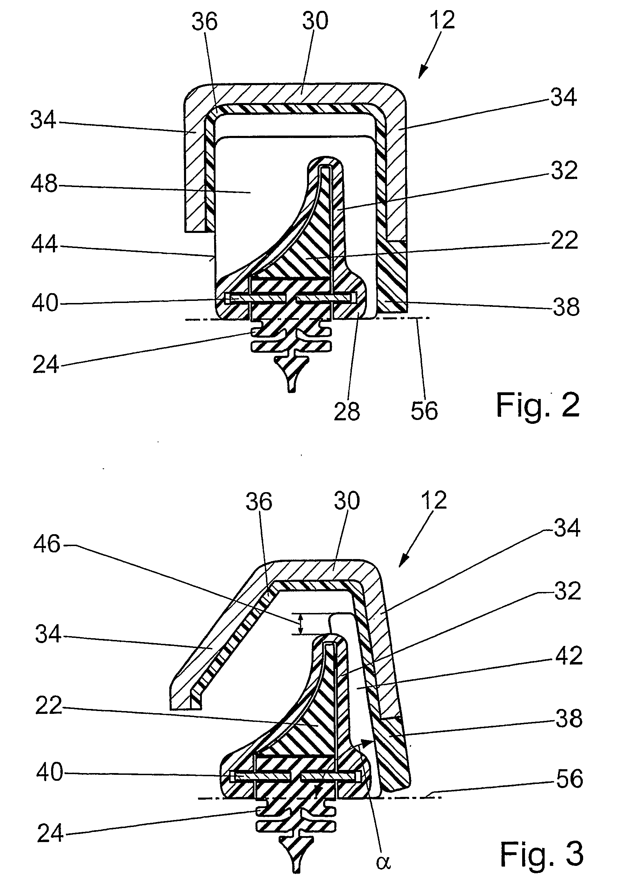

Zur seitlichen Führung des Wischblatts 20 ist an dem Ende, das dem Wischarm 10 zugewandt ist, eine Wischblattführung vorgesehen. Sie besteht aus einer Endkappe 28 mit seitlich angeformten Führungsrippen 48, die quer zur Längsrichtung 58 des Wischblatts 20 verlaufen, und aus dem Gelenkteil 12 mit einem eingesetzten Führungsbügel 36, der als Anlagefläche für die Führungsrippen 48 dient. Die Endkappe 28 aus Kunststoff umfasst den Wischleistenträger 22 und einen Teil der Wischleiste 24 zusammen mit zwei Federschienen 40 aus Federstahl, die in seitliche Längsnuten des Profils eingelegt sind (Fig. 2). Sie bildet eine Abdeckung des Wischblatts 20 im Endbereich und fixiert gleichzeitig die Federschienen 40 axial und zusammen mit dem Verbindungsstück 16 seitlich. Die Führungsrippen 48 werden beim Herstellen an die Endkappe angeformt. Sie besitzen seitliche Führungsflächen 44, die senkrecht zu einer Grundfläche 56 der Endkappe 28 verlaufen und im montierten Zustand im Profil des Wischarms 10, z.B. unter Zwischenschalten eines Führungsbügels 36 an den beiden Seitenwänden 34 des Gelenkteils 12 geführt werden. Bei der Ausführung nach Fig. 2 hat das Gelenkteil 12 ein u-förmiges Querschnittprofil. Der Führungsbügel 36 ist ebenfalls ein Kunststoffteil. Er kleidet die Innenkontur des Gelenkteils 12 im Bereich der Endkappe 28 aus und stützt sich an den Seitenwänden 34 und an der Deckwand 30 ab.

In einer Ausgestaltung der Erfindung sind nur an einem Seitenteil 32 der Endkappe 28 Führungsrippen 42 bzw. 50 mit Führungsflächen 44 bzw. 54 angeformt (Fig.3 bis Fig. 6). Außerdem weisen die Führungsflächen 44 einen Neigungswinkel α zur Grundfläche 56 auf, der geringfügig kleiner 90° und der Neigung der Seitenwand 34 des Gelenkteils 12 angepasst ist. Diese Endkappe 28 ist einem Wischarm 10 zugeordnet, dessen Gelenkteil 12 ein dachförmiges Querschnittprofil mit unterschiedlich geneigten Seitenwänden 34 aufweist. Die Neigung der Führungsflächen 44 ist der steileren Seitenwand 34 angepasst und die Führungsrippen 42 liegen in montierter Stellung an dieser Seitenwand 34 an. In einer Parkposition des Wischarms 10 weist die flachere Seitenwand 34 nach unten und wirkt im Wischbetrieb als Spoiler.

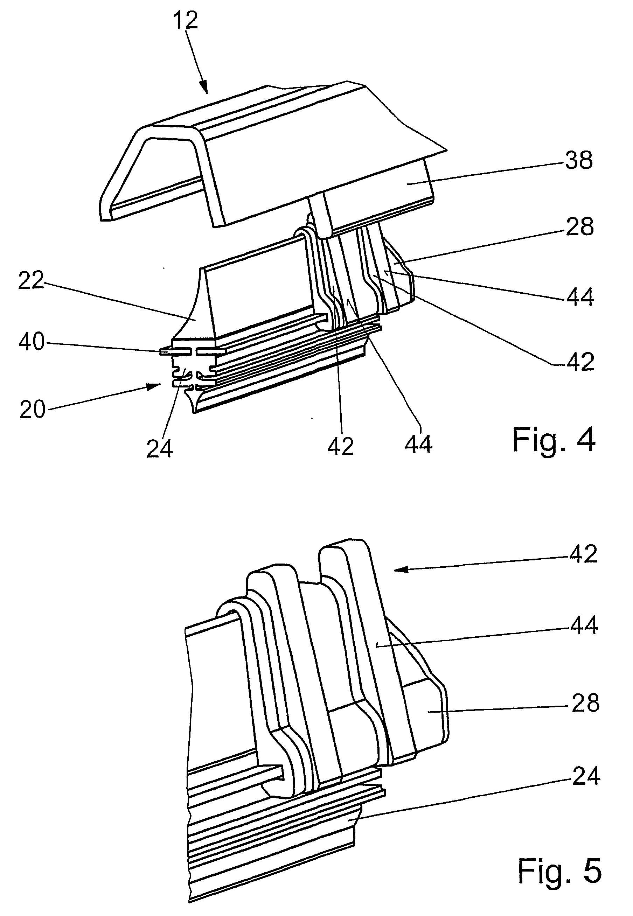

Damit die Führungsflächen 44 eine ausreichende Länge aufweisen, so dass sie auch bei größeren Hubbewegungen ständig Kontakt mit der Anlagefläche an der Seitenwand 34 des Gelenkteils 12 haben, überragen die Führungsrippen 42 in der Ausführung nach Fig. 3 bis Fig. 5 das äußere Profil der Endkappe 28 an einer der Grundfläche 56 abgewandten Seite um einen Bereich 46. Überdies wird die Anlagefläche am Gelenkteil 12 durch den Führungsbügel 36 verlängert, der die Seitenwand 34 um einen Teil 38 überragt. Eine mögliche extreme Lage zwischen dem Gelenkteil 12 und dem Wischblatt 20 ist in Fig. 4 dargestellt.

Nach der Erfindung ist der Führungsbügel 36 in das Gelenkteil 12 eingesetzt, beispielsweise geklipst, geklemmt oder geklebt. Dadurch wird das Gelenkteil 12 auf einfache Weise und nur im Bereich der eintauchenden Endkappe 28 verändert und entspricht im Übrigen der Standardausführung. Somit kann ein Wischarm 10 auch nachträglich mit einer derartigen Wischblattführung ausgerüstet werden.

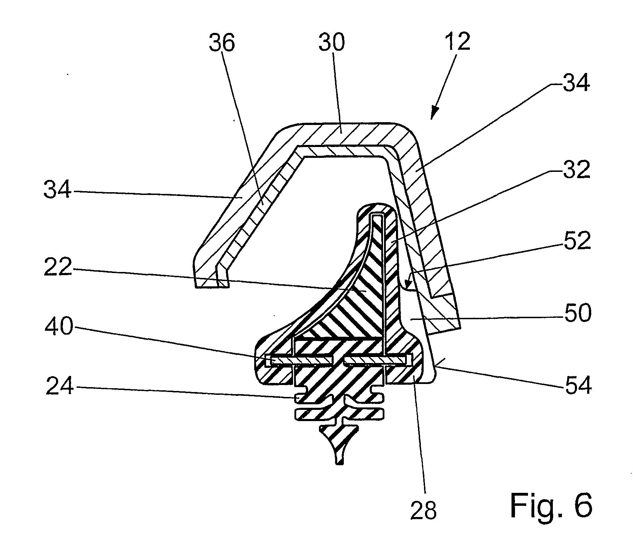

Nach einer weiteren Ausgestaltung (Fig. 6) besteht der Führungsbügel 36 aus einem metallischen Werkstoff und die Führungsrippen 50 sind gegenüber der Höhe der Endkappe 28 verkürzt. Diese Endkappe 28 liegt in einem Bereich mit den Führungsflächen 54 und in einem anderen Bereich mit ihrem oberen Teil am Führungsbügel 36 an. Der Übergang zwischen beiden Bereichen wird durch eine Kehle 52 gebildet.

### Bezugszeichen

- 10: Wischarm
- 12: Gelenkteil
- 14: Wischstange
- 16: Verbindungsstück
- 18: Gelenk
- 20: Wischblatt
- 22: Wischleistenträger
- 24: Wischleiste
- 26: Windschutzscheibe
- 28: Endkappe
- 30: Deckwand
- 32: Seitenteil
- 34: Seitenwand
- 36: Führungsbügel
- 38: Teil
- 40: Federschiene
- 42: Führungsrippe
- 44: Führungsfläche
- 46: Bereich
- 48: Führungsrippe
- 50: Führungsrippe
- 52: Kehle
- 54: Führungsfläche
- 56: Grundfläche
- 58: Längsrichtung

## Patentansprüche

1. Wischblatt (20) eines Scheibenwischers mit einem Wischleistenträger (22) und einer Wischleiste (24), die an ihren Enden Endkappen (28) aufweisen, deren inneres Querschnittprofil dem Querschnittprofil des Wischleistenträgers (22) angepasst ist, **dadurch gekennzeichnet, dass** an mindestens einer der Endkappen (28) eine quer zur Längsrichtung (58) des Wischblatts (20) verlaufende Führungsrippe (42, 48, 50) mit einer Führungsfläche (44, 54) seitlich angeformt ist.

2. Wischblatt (20) nach Anspruch 1, **dadurch gekennzeichnet, dass** es einem Wischarm (10) zuzuordnen ist, der ein u-förmiges Querschnittprofil aufweist, in dem die Endkappe (28) in montierter Stellung durch Führungsrippen (48) auf beiden Seiten an den Seitenwänden (34) geführt ist.

3. Wischblatt (20) nach Anspruch 1, **dadurch gekennzeichnet, dass** es einem Wischarm (10) zuzuordnen ist, der ein dachförmiges Querschnittprofil mit einer steileren Seitenwand (34) aufweist, wobei die Führungsfläche (44, 54) an der einseitig angeformten Führungsrippe (42, 50) in montierter Stellung nur an der steileren Seitenwand (34) geführt ist und die Neigung der Führungsfläche (44, 54) der Neigung der Seitenwand (34) angepasst ist.

4. Wischblatt (20) nach Anspruch 3, **dadurch gekennzeichnet, dass** die Führungsfläche (44, 54) zu einer Grundfläche (56) einen Neigungswinkel aufweist, der geringfügig kleiner 90° ist.

5. Wischblatt (20) nach einem der vorhergehenden Ansprüche, **dadurch gekennzeichnet, dass** die Führungsrippe (42, 48) an der Seite, die der Grundfläche (56) abgewandt ist, das äußere Profil der Endkappe (28) um einen Bereich (46) überragt.

6. Wischblatt (20) nach einem der Ansprüche 3 oder 4, **dadurch gekennzeichnet, dass** die Führungsrippe (50) gegenüber der Höhe der Endkappe (28) so verkürzt ist, das die Endkappe (28) mit ihrem oberen Teil die Innenkontur des Wischarms (10) berührt.

7. Wischblatt (20) nach Ansprüche 2 bis 6, **dadurch gekennzeichnet, dass** in dem Wischarm (10) ein Führungsbügel (36) aus Kunststoff eingesetzt ist, der als Anlagefläche für die Führungsfläche (44, 54) dient.

8. Wischblatt (20) nach Anspruch 7, **dadurch gekennzeichnet, dass** der Führungsbügel (36) aus Kunststoff die der Führungsfläche (44, 54) zugewandte Seitenwand (34) des Wischarms (10) im Querschnitt verlängert.

## Claims

1. Wiper blade (20) of a wiper, having a wiper-strip carrier (22) and a wiper strip (24) which have, at their ends, end caps (28), the inner cross-sectional profile of which is matched to the cross-sectional profile of the wiper-strip carrier (22), **characterized in that** a guide rib (42, 48, 50), which runs transversely with respect to the longitudinal direction (58) of the wiper blade (20) and has a guide surface (44, 54), is integrally formed laterally on at least one of the end caps (28).

2. Wiper blade (20) according to Claim 1, **characterized in that** it is to be assigned to a wiper arm (10) which has a U-shaped cross-sectional profile, in which the end cap (28), in the fitted position, is guided on the side walls (34) by means of guide ribs (48) on both sides.

3. Wiper blade (20) according to Claim 1, **characterized in that** it is to be assigned to a wiper arm (10) which has a roof-shaped cross-sectional profile having one steeper side wall (34), the guide surface (44, 54) on the guide rib (42, 50), which is integrally formed on it on one side, only being guided on the steeper side wall (34) in the fitted position, and the inclination of the guide surface (44, 54) being matched to the inclination of the side wall (34).

4. Wiper blade (20) according to Claim 3, **characterized in that** the guide surface (44, 54) has an angle of inclination which is slightly smaller than 90° with respect to a base surface (56).

5. Wiper blade (20) according to one of the preceding claims, **characterized in that** the guide rib (42, 48), on the side which faces away from the base surface (56), protrudes over the outer profile of the end cap (28) by a region (46).

6. Wiper blade (20) according to either of Claims 3 or 4, **characterized in that** the guide rib (50) is shortened with respect to the height of the end cap (28) in such a manner that the end cap (28), with its upper part, touches the inner contour of the wiper arm (10).

7. Wiper blade (20) according to Claims 2 to 6, **characterized in that** a plastic guide bracket (36) is inserted in the wiper arm (10) and serves as a bearing surface for the guide surface (44, 54).

8. Wiper blade (20) according to Claim 7, **characterized in that** the plastic guide bracket (36) cross-sectionally extends that side wall (34) of the wiper arm (10) which faces the guide surface (44, 54).

## Revendications

1. Balai d'essuie-glace (20) comportant un support de lame (22) ainsi qu'une lame d'essuyage (24) munis de chapeaux (28) à leur extrémité dont le profil de la section intérieure est adapté au profil de la section du support (22),
**caractérisé en ce qu'**
au moins l'un des chapeaux d'extrémité (28) comporte des nervures de guidage (42, 48, 50) dirigées transversalement à la direction longitudinale (58) du balai (20), ces nervures ayant une surface de guidage (44, 54) latérale.

2. Balai d'essuie-glace (20) selon la revendication 1,
**caractérisé en ce qu'**
il est associé à un bras (10) à profil de section en forme de U dans lequel le chapeau d'extrémité (28) est guidé par les nervures de guidage (48) en position de montage, contre les deux côtés des parois latérales (34).

3. Balai d'essuie-glace (20) selon la revendication 1,
**caractérisé en ce qu'**
il est associé à un bras (10) à profil de section en forme de dièdre ayant une paroi latérale (34) fortement inclinée,
la surface de guidage (44, 54) étant guidée en position de montage par la nervure de guidage (42, 50) formée d'un côté, contre la paroi latérale fortement inclinée (34) et l'inclinaison de la surface de guidage (44, 54) correspond à celle de la paroi latérale (34).

4. Balai d'essuie-glace (20) selon la revendication 3,
**caractérisé en ce que**
la surface de guidage (44, 54) présente un angle d'inclinaison légèrement inférieur à 90° par rapport à une surface de base (56).

5. Balai d'essuie-glace (20) selon l'une des revendications précédentes,
**caractérisé en ce que**
la nervure de guidage (42, 48) dépasse le profil extérieur du chapeau (28) d'une distance (46) du côté opposé à la surface de base (56).

6. Balai d'essuie-glace (20) selon l'une des revendications 3 ou 4,
**caractérisé en ce que**
la nervure de guidage (50) est réduite par rapport à la hauteur du chapeau (28) de façon que le chapeau (28) touche par son côté supérieur le contour intérieur du bras d'essuie-glace (10).

7. Balai d'essuie-glace (20) selon l'une des revendications 2 à 6,
**caractérisé en ce que**
le bras (10) est muni d'un arceau de guidage (36) en matière plastique servant de surface d'appui pour la surface de guidage (44, 54).

8. Balai d'essuie-glace (20) selon la revendication 7,
**caractérisé en ce qu'**
en section, l'arceau de guidage (36) en matière plastique prolonge le côté (34) du bras d'essuyage (10) tourné vers la surface de guidage (44, 54).
